# EUROPÄISCHE PATENTSCHRIFT

(11) **EP 4 643 435 B1**
(45) Veröffentlichungstag und Bekanntmachung des Hinweises auf die Patenterteilung: **27.05.2026**
(21) Anmeldenummer: 24704179.1
(22) Anmeldetag: 08.02.2024
(51) Int. Cl.: H02J 7/00, H01M 10/44

(54) **LADEVERFAHREN FÜR EINE SEKUNDÄRBATTERIE UND FAHRZEUG**
CHARGING METHOD FOR A SECONDARY BATTERY AND VEHICLE
PROCÉDÉ DE CHARGE POUR UNE BATTERIE SECONDAIRE ET VÉHICULE

(30) Priorität: 10.03.2023 DE 102023000904
(43) Veröffentlichungstag der Anmeldung: 05.11.2025
(73) Patentinhaber: Mercedes-Benz Group AG, 70372 Stuttgart (DE)
(72) Erfinder: PEGEL, Hendrik, 70188 Stuttgart (DE); WYCISK, Dominik, 70374 Stuttgart (DE); LÜCK, Alexander, 71636 Ludwigsburg (DE); PIEPER, Moritz, 37085 Göttingen (DE)
(74) Vertreter: Novagraaf Group
(86) Internationale Anmeldenummer: PCT/EP2024/053263
(87) Internationale Veröffentlichungsnummer: WO 2024/188562

(56) Entgegenhaltungen:
- DE-A1- 4 443 015

## Beschreibung

Die Erfindung betrifft ein Ladeverfahren für eine Sekundärbatterie nach der im Oberbegriff von Anspruch 1 näher definierten Art sowie ein Fahrzeug zur Durchführung des Verfahrens.

Der Anteil von Fahrzeugen mit einem zumindest teilelektrifizierten Antriebsstrang, kurz Elektrofahrzeuge, nimmt immer weiter zu. Zum Bevorraten elektrischer Antriebsenergie sind in solchen Elektrofahrzeugen typischerweise Traktionsbatterien verbaut. Während das Betanken eines Verbrennerfahrzeugs mit flüssigem Kraftstoff an einer Zapfsäule vergleichsweise schnell vonstattengeht, ist zum Aufladen einer besagten Traktionsbatterie an einer Ladestation mehr Zeit erforderlich. Insbesondere bei langen Fahrten, deren Wegstrecke größer ist als die Reichweite des Fahrzeugs, müssen ein oder mehrere Ladestopps eingelegt werden. Solche Zwangspausen können für die fahrzeugführende Person störend sein. Zudem können die verfügbaren Ladestationen beispielsweise auf einem Autobahnrasthof insbesondere zur Ferienzeit ausgelastet sein, sodass zusätzlich bis zum Freiwerden einer verfügbaren Ladestation gewartet werden muss. Somit entsteht der Bedarf Verfahren und Mittel bereitzustellen, mit denen sich die notwendige Ladedauer beim Durchführen eines Ladevorgangs verkürzen lässt.

Die Ladedauer ist dabei von der durch die Ladestation abrufbaren Ladeleistung abhängig. Je größer die Ladespannung und der Ladestrom sind, desto schneller lässt sich auch die Traktionsbatterie des Fahrzeugs mit elektrischer Antriebsenergie aufladen. Das Fahrzeug bzw. die entsprechende Traktionsbatterie muss jedoch technisch für jeweilige Ladeströme und Ladespannungen ausgelegt sein. Während des Ladevorgangs heizen sich die Zellen der Traktionsbatterie aufgrund von Dissipationswärme auf, was das Vorsehen einer aktiven Kühlung und notfalls das Reduzieren des Ladestroms erfordert, um eine Überhitzung der Batteriezellen zu verhindern. Zudem darf die maximale Zellspannung nicht überschritten werden und im Bereich der Plating-Grenze die minimale Anodenspannung nicht unterschritten werden.

Im Bereich der Plating-Grenze, also der Anodenpotenziallimitierung, ist der den Zellstrom begrenzende Ort der Zelle derjenige mit der niedrigsten Temperatur und somit der höchsten Überspannung. Beim Durchführen von Ladevorgängen stellt sich somit der folgende Zielkonflikt, dass die die heißeste Stelle der Batteriezelle, auch als Hotspot bezeichnet, einen festgegebenen Maximalwert nicht überschreiten darf, gleichzeitig jedoch die kälteste Stelle der Batteriezellen, auch als Coldspot bezeichnet, so warm wie möglich sein sollte, um Widerstände und Überspannungen zu minimieren. Dies führt zum Zielkonflikt, die einzelnen Zellen der Traktionsbatterie möglichst stark und früh zu kühlen, um ein Überschreiten der zulässigen Temperatur des Aktivmaterials zu verhindern, gleichzeitig jedoch möglichst wenig und spät zu kühlen, um sicherzustellen, dass die Coldspots möglichst warm sind.

Mit dieser Problemstellung setzt sich der Erfinder unter anderem in folgendem Paper auseinander:
Hendrik Pegel, Dominik Wycisk, Alexander Scheible, Luca Tendera, Arnulf Latz, Dirk Uwe Sauer; Fast-charging performance and optimal thermal management of large-format full-tab cylindrical lithium-ion cells under varying environmental conditions; Journal of Power Sources, Volume 556, 2023, 232408; ISSN 0378-7753, httρs://doi.org/10.1016/j.jpowsour.2022.232408

Das Paper beschäftigt sich mit dem Thermomanagement von Lithium-Ionen-Rundzellen während des Durchführens von Ladevorgängen. Ziel ist es in Abhängigkeit des Batterieladezustands und der Anfangstemperatur der Batteriezelle diejenige Zelltemperatur zu bestimmen, ab der eine Kühlung für die Zelle aktiviert werden sollte, um die Ladedauer durch nutzen eines möglichst hohen Ladestroms zu verkürzen. Es wird also die Frage beantwortet, wie zu Beginn des Ladevorgangs gekühlt werden soll, sodass die Hotspottemperatur den Maximalwert nicht überschreitet, die Coldspottemperatur jedoch so warm wie möglich wird. Die Ergebnisse für den untersuchten Zelltyp werden in Form einer sogenannten Kühl-und-Heiz-Karte dargestellt. Diese zeigt die jeweils sich durch den Ladevorgang einstellende Zelltemperatur ab der die aktive Kühlung aktiviert werden sollte, in Abhängigkeit der Anfangstemperatur. Zudem kann bei kalten Anfangstemperaturen das aktive Beheizen der Batteriezelle von Vorteil sein. So zeigt die Kühl-und-Heiz-Karte ebenfalls in Abhängigkeit der Anfangstemperatur wann die aktive Beheizung gestartet werden soll, bei welcher Zelltemperatur sie ausgeschaltet werden soll und bei welcher Zelltemperatur anschließend die aktive Kühlung aktiviert werden soll.

Ferner offenbart die CN 1 15 709 670 A ein Thermomanagementverfahren für den Ladevorgang eines Akkus sowie die hierzu einsetzbare Hardware. Das Thermomanagementverfahren sieht es vor einen Akku während des Ladevorgangs in einer ersten Phase nicht zu kühlen und ein Kühlsystem für den Akku in einer zweiten Phase, welche erreicht wird, wenn eine festgelegte Temperaturdifferenz zwischen der heißesten Stelle des Akkus und einer vom Ladezustand abhängigen Maximaltemperatur vorliegt, einzuschalten. Dabei wird die Temperatur des Kühlmediums geregelt, um das Temperaturniveau des Akkus innerhalb eines festgelegten Intervalls zu halten.

Ferner offenbart die US 2016 / 0 082 860 A1 ein Verfahren für das Management der Temperatur einer Batterie eines Elektrofahrzeugs. Dabei wird eine Heizung oder Kühlung für die Batterie in Abhängigkeit des Vergleichs eines Temperaturgradienten über die Batterie mit einer Referenzkurve aktiviert bzw. deaktiviert. Die Kühlleistung kann in Abhängigkeit der von der Batterie abgegebenen Wärmeleistung geregelt werden.

Ferner offenbart die DE 10 2018 221 088 A1 ein Batteriesystem für ein Elektrofahrzeug sowie ein Verfahren zu dessen Betrieb. Das Batteriesystem umfasst wenigstens ein Batteriemodul dessen Temperatur mittels einer Heizeinrichtung und einer Kühleinrichtung auf eine Solltemperatur eingestellt werden kann. Zum Anpassen der Kühlleistung kann der Durchfluss des Kühlmediums verändert werden.

Zudem offenbart die DE 44 43 015 A1 ein Verfahren zum Betrieb von Hochtemperaturbatterien. Dabei ist eine Regelvorrichtung vorgesehen, die einen vom Ladezustand der Batterie und der Leistung einer Kühlvorrichtung abhängigen Temperatursollwert festlegt, ab dessen Überschreiten eine Kühlung für die Batterie aktiviert wird. Der Temperatursollwert entspricht einer Temperatur, welche sich bei voller Ausnutzung der Wärmekapazität der Batterie und bei dem für die Batterie maximal vorgesehen Dauerstrom unter Beachtung der maximal zulässigen Batterietemperatur ergibt. Die Kühlleistung wird dabei unter Berücksichtigung der Ein- und Austrittstemperatur des Kühlmediums ermittelt.

Der vorliegenden Erfindung liegt die Aufgabe zugrunde ein im Bezug zum genannten Stand der Technik noch weiter verbessertes Ladeverfahren für die galvanischen Zellen einer Sekundärbatterie anzugeben.

Erfindungsgemäß wird diese Aufgabe durch ein Ladeverfahren für eine Sekundärbatterie mit den Merkmalen des Anspruchs 1 gelöst. Vorteilhafte Ausgestaltungen und Weiterbildungen sowie ein Fahrzeug zur Durchführung des Verfahrens ergeben sich aus den hiervon abhängigen Ansprüchen.

Ein gattungsgemäßes Ladeverfahren für eine Sekundärbatterie, wobei der zum Aufladen zumindest einer galvanischen Zelle der Sekundärbatterie mit elektrischer Energie verwendete Ladestrom während des Ladevorgangs unter Berücksichtigung von zumindest einer der Größen: maximale Zellspannung, minimale Anodenspannung, Zelltemperatur und/oder maximaler Ladestrom geregelt wird und die dabei dissipierte Wärme mittels eines während des Ladevorgangs zumindest zeitweise aktiven Kühlsystems abgeführt wird, wird erfindungsgemäß durch die folgenden Ladephasen weitergebildet:
a) Laden der Zelle mit deaktiviertem Kühlsystem, solange die Zelltemperatur am potentiell heißesten Punkt der Zelle kleiner ist als eine festgelegte Aktivierungstemperatur, wobei die Aktivierungstemperatur vom Zelltyp und der Ausgangstemperatur der Zelle beim Starten des Ladevorgangs abhängig ist;
b) Laden der Zelle mit auf Volllast eingeschaltetem Kühlsystem, sobald die Zelltemperatur am potentiell heißesten Punkt der Zelle die festgelegte Aktivierungstemperatur erreicht; und
c) sobald die Temperaturänderung der Zelltemperatur am potentiell heißesten Punkt der Zelle Null erreicht: Reduzieren der Kühlleistung des Kühlsystems und Regelung der Kühlleistung derart, dass die Zelltemperatur am potentiell heißesten Punkt der Zelle und/oder am potentiell kältesten Punkt der Zelle im Wesentlichen konstant gehalten wird: wobei
die Zelltemperatur in einem festgelegten Ladezustandsbereich vor Erreichen der Vollladung der Zelle abgesenkt wird.

Mit Hilfe des erfindungsgemäßen Verfahrens lässt sich die Ladedauer für galvanische Zellen von Sekundärbatterien noch weiter reduzieren. Wie eingangs bereits erwähnt bestimmen die lokalen Temperaturen des Aktivmaterials der Zelle den lokalen Widerstand und damit die lokalen Überspannungen. Der potenziell kälteste Punkt der Zelle, im Folgenden als Coldspot bezeichnet, begrenzt somit den maximal nutzbaren Ladestrom, da hier mit den höchsten Zellspannungen gerechnet werden muss. Je wärmer der Coldspot ist, desto höhere Zellströme lassen sich zum Laden der Zelle nutzen. Mit einer Zunahme des Ladestroms lässt sich die Ladedauer verkürzen. Die Anmelderin hat erkannt, dass sich daraus folgende Fragestellung für das Durchführen von Ladevorgängen ergibt: Wie sollte die Kühlung bei höheren Ladezuständen im Bereich der Plating-Grenzlimitierung geregelt werden, damit während des Ladevorgangs die Temperatur des Coldspots nicht unnötig sinkt? Dabei muss als weitere Randbedingung gewährleistet werden, dass die maximal zulässige Temperatur des Aktivmaterials der Zelle nicht überschritten wird.

Mit Hilfe des erfindungsgemäßen Verfahrens ist es möglich die Coldspottemperatur der Zelle im Vergleich zu bekannten Ladeverfahren schneller anzuheben und während des fortschreitenden Ladevorgangs unter Verhinderung, dass die Zelltemperatur am potenziell heißesten Punkt der Zelle, im Folgenden auch Hotspot bezeichnet, die für das verwendete Aktivmaterial der Zelle gültige Maximaltemperatur überschreitet, auf einem möglichst hohen Niveau zu halten. Dies ermöglicht es während des gesamten Ladevorgangs den höchstmöglichen Ladestrom zu nutzen, was die Ladedauer entsprechend verkürzt.

Bei der galvanischen Zelle handelt es sich bevorzugt um eine Lithium-Ionen-Zelle. Die Zelle kann jeglicher Bauart entsprechen, beispielsweise eine Pouch-Zelle, bevorzugt ist sie jedoch als Rundzelle ausgeführt.

Der Ladestrom wird während des Ladevorgangs gemäß bewährter Verfahren geregelt. Die erfindungsgemäßen Verfahrensschritte beziehen sich auf die Kühlung der Zelle, sodass das erfindungsgemäße Ladeverfahren auch als Thermomanagementverfahren bezeichnet werden könnte.

Die Lage von Hotspot und Coldspot variiert je nach geometrischer und technischer Ausgestaltung der jeweiligen verwendeten galvanischen Zelle und des entsprechenden Kühlsystems. Abhängig vom Zellaufbau und Gehäusematerial befinden sich bei einer Rundzelle, welche zur Kühlung auf eine Kühlplatte montiert ist, der Hotspot beispielsweise am inneren oberen Ring des Aktivmaterials und der Coldspot am äußeren unteren Ring des Aktivmaterials im Bereich der Kontaktstelle zur Kühlplatte. Die Zelltemperatur an einer beliebigen Stelle, also insbesondere am Hotspot und am Coldspot, kann mit Hilfe von Temperatursensoren gemessen werden oder auch ergänzend oder alternativ mit Hilfe eines Simulationsmodells der galvanischen Zelle rechnerisch abgeschätzt werden. Analog lassen sich die übrigen physikalischen Kenngrößen wie Zellspannung und Ladestrom mit Hilfe von Messeinrichtungen experimentell bestimmen und/oder mittels Rechenmodell abschätzen.

Mittels der Ladephase a) wird erreicht, dass sich die Coldspottemperatur möglichst schnell aufheizt, sodass die Begrenzung der Anodenpotentiallimitierung so lange wie möglich hinausgezögert und so stark wie möglich verringert wird in vielen Fällen auch möglichst schnell höhere Ladeströme verwendet werden können. Durch das Durchführen von Ladephase b) wird verhindert, dass sich dabei die Zelle so stark aufheizt, dass ihr maximal zulässiger Temperaturbereich erreicht bzw. überschritten wird. Entscheidend ist hierfür das Messen bzw. Bestimmen der Zelltemperatur an derjenigen Stelle, die sich beim Durchführen des Ladevorgangs am stärksten erwärmt, also die Hotspottemperatur.

Mit fortschreitender Ladedauer gilt es die Kühlung derart anzupassen, dass die Coldspottemperatur nach Möglichkeit noch weiter gesteigert werden kann oder zumindest konstant gehalten wird, ohne dass dabei die Hotspottemperatur die maximal zulässige Temperatur des Aktivmaterials übersteigt. So würde während des Ladevorgangs bei einer Kühlung mit der maximalen Kühlleistung die Zelltemperatur absinken, was jedoch verhindert werden soll. Hierzu wird die Kühlleistung entsprechend durch das Durchführen von Ladephase c) reduziert. Dass die Temperaturänderung der Zelltemperatur am Hotspot Null erreicht ist also gleichbedeutend damit, dass sich die Zelle an diesem Punkt nicht weiter aufheizt, sondern ihre Temperatur zumindest in dem Moment konstant hält. Bei unveränderter Kühlung mit maximaler Kühlleistung würde sich das Vorzeichen umkehren und der Hotspot würde sich abkühlen. Um diesen Zeitpunkt zu erfassen wird die gemessene oder rechnerisch abgeschätzte Hotspottemperatur ausgewertet. Da die Hotspottemperatur experimentell für typischerweise im Automotivebereich verwendete Rundzellen nur schwer erfassbar ist, wird typischerweise die rechnerisch abgeschätzte Hotspottemperatur verwendet.

Der Zeitpunkt, an dem die Temperatur des Hotspots das Maximum erreicht und zu fallen beginnt, lässt sich in der Praxis auch durch die zeitliche Ableitung etwaiger Temperatursensoren ermitteln.

Die Hotspottemperatur und/oder Coldspottemperatur kann selbst direkt als Führungsgröße für die Regelung der Kühlleistung verwendet werden. Hierzu ist jedoch ein vergleichsweise komplexer Regler notwendig, da die Regelstrecke zwischen Kühlsystem und Hotspottemperatur durch die Geometrie, interne Wärmepfade und bereits vorausgebildete Temperaturgradienten sehr komplex ist.

Wie bereits beschrieben wird die Zelltemperatur in einem festgelegten Ladezustandsbereich vor Erreichen der Vollladung der Zelle abgesenkt. Soll nach dem fertigen Ladevorgang mittels der Sekundärbatterie elektrische Energie bereitgestellt werden, so kann sich dabei die Sekundärbatterie bzw. die eine oder die mehreren galvanischen Zellen der Sekundärbatterie noch weiter aufheizen. Dies ist insbesondere dann der Fall, wenn kurzfristig eine besonders große Leistung abgefragt wird. Wie noch erwähnt werden wird, kann das erfindungsgemäße Verfahren zum Aufladen der Traktionsbatterie eines Fahrzeugs verwendet werden. Belastet der Fahrzeugnutzer nach dem beendeten Ladevorgang die Traktionsbatterie stark, beispielsweise durch eine sportliche Fahrweise, so besteht die Gefahr, dass die Zellen der Traktionsbatterie über die maximal zulässige Temperatur erhitzt werden. Indem jedoch kurz vor Beenden des Ladevorgangs die Zelltemperatur abgesenkt wird, beispielsweise durch erneutes Erhöhen der Kühlleistung, so wird ein gewisser thermischer Puffer vorgesehen, sodass eine erhöhte Antriebsleistung abgerufen werden kann, ohne dass die Zellen der Traktionsbatterie Gefahr laufen, zu überhitzen. Der festgelegte Ladezustandsbereich vor Erreichen der Vollladung, in dem die Zelltemperatur abgesenkt wird, kann dabei in Abhängigkeit der technischen Ausführung der Traktionsbatterie und der verwendeten Ladestation, insbesondere der genutzten Ladespannung und des Ladestroms, variabel gewählt werden. Beispielsweise kann ein Ingenieur festlegen, dass die Zellen der Traktionsbatterie so stark abgekühlt werden sollen, dass nach dem Beenden des Ladevorgangs die maximal abrufbare Antriebsleistung für mindestens 10 Minuten oder mindestens die nächsten drei Kilometer bereitgestellt werden soll, ohne die Gefahr der Überhitzung. Entsprechende Ladezustandsbereiche lassen sich dann für unterschiedliche Fahrzeugkonfigurationen und Traktionsbatterievarianten ebenfalls mittels Tests und/oder Simulationen festlegen. Das Absenken der Zelltemperatur vor Beenden des Ladevorgangs hat den weiteren positiven Effekt, dass temperaturbedingte Alterungsvorgänge verlangsamt bzw. gestoppt werden. Die Ladedauer nimmt dann zwar unmerklich zu, dies ist gegen Ende des Ladevorgangs jedoch nicht mehr so bedeutend.

Eine vorteilhafte Weiterbildung des erfindungsgemäßen Verfahrens sieht somit vor, dass zur Regelung der Kühlleistung:
- die von der Zelle abgegebene Wärmeleistung gemessen und/oder rechnerisch abgeschätzt wird;
- die vom Kühlsystem abführbare oder abgeführte Wärmeleistung gemessen und/oder rechnerisch abgeschätzt wird; und
- die Kühlleistung derart geregelt wird, dass die abführbare oder abgeführte Wärmeleistung im Wesentlichen der von der Zelle abgegebenen Wärmeleistung entspricht.

Zusätzlich zur Wärmeleistung der Zellen, also der Hauptwärmequellen, kann vorteilhaft noch die Wärmeerzeugung durch die Zellverbinder und weitere nachrangige Quellen der Wärmeerzeugung ermittelt oder abgeschätzt und bei der Regelung der Kühlleistung berücksichtigt werden. Die Kühlleistung der Batterie kann dadurch noch besser auf die Gesamtwärmeerzeugung der Batterie abgestimmt und entsprechend geregelt werden.

Hierdurch ist eine einfache und robuste Regelung möglich. Bei der von der Zelle abgegebenen Wärmeleistung handelt es sich um die während des Ladevorgangs dissipierte Wärme. Um die Zelle auf konstanter Temperatur zu halten, muss den Grundsätzen der Thermodynamik folgend somit die dissipierte Abwärme abgeführt werden. Wird also die Kühlleistung auf die abgegebene Wärmeleistung der Zellen und der zusätzlichen Wärmequellen, beispielsweise in Leitungs- und Kontaktelementen angepasst, so lässt sich ebenfalls sicherstellen, dass die Hotspottemperatur bzw. Coldspottemperatur im Wesentlichen konstant gehalten werden, ohne dass die entsprechenden Zelltemperaturen tatsächlich gemessen werden müssen, wodurch sich das erfindungsgemäße Verfahren auch für Ladevorgänge für im Automotivebereich häufig verbaute Rundzellen einfach und kostengünstig implementieren lässt.

Die von der Zelle abgegebene Wärmeleistung bzw. Verlustenergie kann einfach und vergleichsweise genau mittels des rechnerischen Zellmodells bestimmt werden. Diese Verlustenergie kann auch besonders einfach über die gemessene Klemmspannung, die bekannte Leerlaufspannung und den gemessenen Betriebsstrom abgeschätzt werden, was jedoch etwas ungenauer ist als die Abschätzung mittels des Zellmodells.

Die vom Kühlsystem abführbare Wärmeleistung kann dann ebenfalls mittels Rechenmodell approximiert werden. Besonders vorteilhaft kann jedoch auch die tatsächlich abgeführte Wärmeleistung experimentell ermittelt werden.

Hierdurch kann die durch den Regler eingestellte Kühlleistung schnell und einfach korrigiert werden. Es handelt sich dabei um eine Kaskadenregelung, welche sich einfach umsetzen lässt, enorm robust ist und bei Tests hervorragende Ergebnisse geliefert hat.

Dabei muss berücksichtigt werden, dass das Batteriesystem hunderte Zellen haben kann und die Kühlleistung so geregelt wird, dass auch die Zelle ausreichend gekühlt wird, die zuerst die maximale Temperaturgrenze erreichen würde, das heißt beispielsweise eine Zelle nahe am Kühlmittelausgang, da dort das Kühlmittel schon vorgewärmt ist. Auf diese Zelle ausgelegt wird also die erforderliche Kühlleistung geregelt.

Entsprechend einer weiteren vorteilhaften Ausgestaltung des erfindungsgemäßen Verfahrens wird zum Einstellen der vom Kühlsystem abzuführenden Wärmeleistung der Wärmeübergangskoeffizient zwischen der Interaktionsfläche zwischen Zelle und Kühlsystem angepasst. Zur Kühlung der Zelle kommen bewährte Methoden und Verfahren in Frage. Wärme lässt sich generell mittels Wärmeleitung, Wärmestrahlung sowie per Konvektion abführen. Bevorzugt wird ein auf Konvektion, besonders bevorzugt erzwungener Konvektion, basierendes Kühlsystem verwendet. Durch Anpassen des Wärmeübergangskoeffizienten lässt sich der abzuführende Wärmestrom bzw. die Wärmeleistung besonders komfortabel und genau einstellen. Beispielsweise lässt sich die durch ein Kühlmedium benetzte Fläche, der Massenstrom des Kühlmediums und/oder die Temperatur des Kühlmediums ändern.

Bevorzugt wird ein fluidbasiertes Kühlsystem genutzt, wobei zumindest ein Abschnitt der Zelle mittelbar oder unmittelbar vom Kühlmedium angeströmt oder umströmt wird, und zum Anpassen des Wärmeübergangskoeffizienten der Volumenstrom des Kühlmediums geregelt wird. Dies ermöglicht eine besonders einfache Regelung der Kühlleistung.

Häufig werden in Fahrzeugen Rundzellen verbaut, die auf einer Kühlplatte befestigt sind. Die Kühlplatte wiederum wird von einem flüssigen Kühlmedium durchströmt. Entsprechend wird die Wärme über den Boden der Rundzelle abgeführt. Zum mittelbaren Anströmen der Zelle ist also ein Kühlkörper an die Zelle angeschlossen, der wiederum mittelbar beispielsweise über Wärmeleitpads oder Wärmeleitpaste mit der Zelle in Verbindung steht.

Die gekühlte Fläche der Zelle ist bekannt und entspricht wie bereits erwähnt bei einer auf einer Kühlplatte angeschlossenen Rundzelle der Querschnittsfläche des Zellenbodens. Die Fluidtemperaturen werden am Kühlmittelvorlauf und Kühlmittelrücklauf standardmäßig gemessen. Für die Fluidtemperatur kann auch ein Mittelwert der Vorlauf- und Rücklauftemperatur verwendet werden. Die Bodentemperatur der Zelle kann ebenfalls gemessen oder mittels Rechenmodell abgeschätzt werden.

Entsprechend einer weiteren vorteilhaften Ausgestaltung des Verfahrens wird zum Anpassen des Volumenstroms des Kühlmediums die Drehzahl einer Kühlmediumförderpumpe geregelt. Hierdurch wird eine noch einfachere und robustere Regelung des Volumenstroms ermöglicht. Im Gegensatz zur Beeinflussung des Volumenstroms durch beispielsweise das Öffnen und Schließen von im Strömungskanal vorgesehenen Blenden oder Ventilen lassen sich hierdurch Strömungsverluste reduzieren und entsprechend Antriebsenergie zum Betreiben der Kühlmediumförderpumpe einsparen. Das Ansprechverhalten, also die Beeinflussung des Volumenstroms durch das Anpassen der Drehzahl ist zudem besonders direkt.

Eine weitere vorteilhafte Ausgestaltung des erfindungsgemäßen Verfahrens sieht ferner vor, dass wenn die Ausgangstemperatur der Zelle kleiner ist als eine festgelegte Heiztemperatur, die Zelle während Ladephase a) zumindest zeitweise aktiv beheizt wird, wobei eine hierzu verwendete Heizung beim Erreichen einer unterhalb der Aktivierungstemperatur liegenden Heiz-Deaktivierungstemperatur abgeschaltet wird, und wobei die Heiz-Deaktivierungstemperatur vom Zelltyp und der Ausgangstemperatur der Zelle beim Starten des Ladevorgangs abhängig ist. Der maximal nutzbare Ladestrom ist wie bereits erwähnt von der Zelltemperatur abhängig und wird durch kalte Temperaturen nach oben hin begrenzt. Bei kalten Temperaturen, insbesondere um oder unterhalb des Gefrierpunkts, kann somit der Ladevorgang nur mit einem reduzierten Ladestrom durchgeführt werden. Wird jedoch die Zelle aktiv beheizt, so erhöht sich entsprechend die Zelltemperatur am Coldspot, sodass mit höheren Ladeströmen geladen werden kann, was die Ladedauer weiter verkürzt. Auch hier sind je nach Geometrie und technischer Ausführung der Zelle unterschiedliche Temperaturgrenzen definiert, wann die aktive Heizung eingeschaltet werden sollte und wann sie wieder ausgeschaltet werden sollte, um eine Überhitzung zu vermeiden.

Entsprechend einer weiteren vorteilhaften Ausgestaltung des erfindungsgemäßen Verfahrens liest eine Recheneinheit zur Regelung des Kühlsystems die Aktivierungstemperatur aus einer Kühl-Heiz-Karte aus, wobei die Kühl-Heiz-Karte für den verwendeten Zelltyp initial durch das Durchführen von Messungen und/oder Simulationen erstellt wurde, wobei zum Bestimmen des Zusammenhangs zwischen Aktivierungstemperatur und Ausgangstemperatur für unterschiedliche Ausgangstemperaturen das Kühlsystem jeweils zu unterschiedlichen Zelltemperaturen aktiviert wurde und diejenige Zelltemperatur als Aktivierungstemperatur festgelegt wird, zu der die Ladezeit der Zelle zur respektiven Ausgangstemperatur am geringsten ist.

Der passende Zeitpunkt zum Aktivieren des Kühlsystems gemäß Ladephase b) ist von besonderer Bedeutung für die Reduktion der Ladedauer. Wird das Kühlsystem zu früh eingeschaltet, so geht wertvolles Restpotenzial zum Erhöhen des Ladestroms und damit zum Verkürzen der Ladedauer verloren. So könnte nämlich der Coldspot noch weiter erwärmt werden, und entsprechend ein höherer Ladestrom verwendet werden. Wird hingegen das Kühlsystem zu spät aktiviert, so muss bei Erreichen der zulässigen Aktivmaterialtemperatur am Hotspot der aktuelle Ladestrom plötzlich und steil reduziert werden, um eine Überhitzung noch vermeiden zu können. Somit geht ebenfalls ein verbleibendes Potenzial zum Reduzieren der Ladedauer verloren.

Entsprechend existieren für unterschiedliche Batterieladezustände (State-Of-Charge, SOC) zu verschiedenen Ausgangstemperaturen jeweils individuelle Optimalwerte, bei denen sich bedingt durch die im Ladevorgang entstehende Dissipationswärme einstellenden Zelltemperaturen das Kühlsystem aktiviert werden sollte. Diese optimalen Temperaturen werden in Form der Aktivierungstemperatur mittels vorab durchzuführender Testreihen bestimmt. Das Verfahren ist analog zu der im Paper des Erfinders offenbarten Herangehensweise zum Bestimmen der Kühl-Heiz-Karte. Siehe hierzu auch: Hendrik Pegel, Dominik Wycisk, Alexander Scheible, Luca Tendera, Arnulf Latz, Dirk Uwe Sauer; Fast-charging performance and optimal thermal management of large-format full-tab cylindrical lithium-ion cells under varying environmental conditions; Journal of Power Sources, Volume 556, 2023, 232408; ISSN 0378-7753, https://doi.org/10.1016/j.jpowsour.2022.232408*.*

Eine weitere vorteilhafte Ausgestaltung des erfindungsgemäßen Verfahrens sieht ferner vor, dass eine Recheneinheit zur Regelung der Heizung die Heiztemperatur und die Heiz-Deaktivierungstemperatur aus der Kühl-Heiz-Karte ausliest, wobei zum Bestimmen des Zusammenhangs zwischen Heiztemperatur, Heiz-Deaktivierungstemperatur und Ausgangstemperatur für unterschiedliche Ausgangstemperaturen die Heizung jeweils zu unterschiedlichen Zelltemperaturen aktiviert und deaktiviert wurde und diejenigen Zelltemperaturen als Heiztemperatur und Heiz-Deaktivierungstemperatur festgelegt werden, zu der die Ladezeit der Zelle zur respektiven Ausgangstemperatur am geringsten ist. Die Art und Weise, wie die Beheizung der Zelle durchgeführt wird, wirkt sich ebenfalls auf die Ladedauer aus. So sollte die Zelle möglichst schnell aufgeheizt werden, sodass möglichst früh im Vergleich hohe Ladeströme verwendet werden können, was die Ladedauer reduziert. Die Heizung sollte somit ausreichend groß dimensioniert sein. Die Ausgangstemperatur, ab der ein positiver Einfluss auf die Ladedauer durch das Aktivieren der Heizung festgestellt wird, wird analog zum Vorgehen zur Bestimmung der Aktivierungstemperatur mittels initial durchgeführter Testreihen ermittelt. Dabei stellt sich die Frage wann, also bei welcher Zelltemperatur, die Heizung wieder deaktiviert werden sollte, um zum einen die Zelltemperatur am Coldspot auf eine möglichst hohe Temperatur zu bringen, dabei jedoch eine Überhitzung des Hotspots zu vermeiden. Durch anschließendes Aktivieren des Kühlsystems, auch bei vergleichsweise kalten Ausgangstemperaturen bzw. Umgebungstemperaturen, lässt sich die Zelle weiter erwärmen als ohne anschließende Kühlung, wodurch schneller höhere Ladeströme verwendet werden können. Auch die Fragestellung wann die Heizung zu aktivieren bzw. deaktivieren ist wird im Zusammenhang mit den initial durchzuführenden Testreihen beantwortet. Diesbezüglich wird erneut auf das bereits referenzierte Paper des Erfinders verwiesen.

Bei einem Fahrzeug, umfassend eine Traktionsbatterie, ein Kühlsystem und wenigstens ein Steuergerät, sind erfindungsgemäß die Traktionsbatterie, das Kühlsystem und das wenigstens eine Steuergerät zur Durchführung eines im vorigen beschriebenen Verfahrens eingerichtet. Bei dem Fahrzeug kann es sich um ein beliebiges Straßenfahrzeug wie einen Pkw, Lkw, Transporter, Bus oder dergleichen handeln. Es kann sich auch um ein Schienenfahrzeug, Wasserfahrzeug oder Luftfahrzeug handeln. Zur Überwachung der Traktionsbatterie sowie zum Regeln des Kühlsystems kann ein und dasselbe Steuergerät verwendet werden oder auch unterschiedliche Steuergerät.

Zumindest ein Steuergerät kann dabei auch vom Batteriemanagementsystem der Traktionsbatterie ausgebildet sein. Das erfindungsgemäße Fahrzeug ist durch Anwenden des erfindungsgemäßen Verfahrens dazu in der Lage die Ladedauer eines Ladevorgangs zum Laden der Zellen der Traktionsbatterie zu verkürzen, was den Komfort für den Fahrzeugnutzer verbessert. Erfindungsgemäß wird also das offenbarte Ladeverfahren zum Laden der Traktionsbatterie eines Fahrzeugs verwendet.

Weitere vorteilhafte Ausgestaltungen des erfindungsgemäßen Ladeverfahrens für eine Sekundärbatterie ergeben sich auch aus den Ausführungsbeispielen, welche nachfolgend unter Bezugnahme auf die Figuren näher beschrieben werden.

Dabei zeigen:
- Fig. 1: eine schematisierte Schnittansicht einer galvanischen Zelle einer Sekundärbatterie;
- Fig. 2: ein erstes Diagramm, zeigend die Zellspannung und Anodenspannung über der Zeit während eines Ladevorgangs der galvanischen Zelle, ein zweites Diagramm, zeigend die Zelltemperatur an verschiedenen Positionen der Zelle und das C-Rating der Zelle über der Zeit während des Ladevorgangs der galvanischen Zelle, und ein drittes Diagramm, zeigend die von der Zelle beim Laden abgegebene Wärmeleistung und die korrespondiere Kühlleistung eines zum Kühlen der Zelle verwendeten Kühlsystems; und
- Fig. 3: zwei Diagramme, zeigend eine Kühl-Heiz-Karte und die Ladedauer des Ladevorgangs, welcher sich entsprechend der Kühl-Heiz-Karte gewählten Startbedingungen zum Aktivieren des Kühlsystems einstellt.

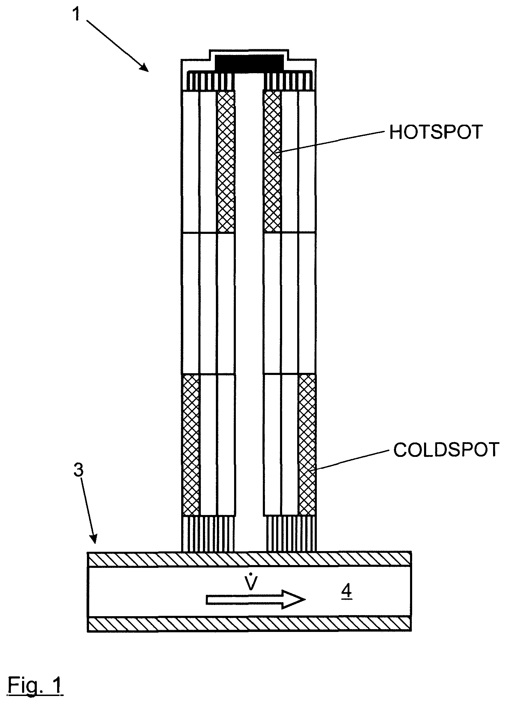

Figur 1 zeigt eine zur Ausbildung einer Sekundärbatterie verwendete galvanischen Zelle 1. Beispielhaft handelt es sich um eine als Rundzelle ausgestaltete Lithium-Ionen-Zelle. Beispielsweise ist die Rundzelle vom Typ 18650, 21700 oder 46800. Es könnte sich jedoch auch um eine Pouchzelle oder dergleichen handeln. Mehrerer solcher Zellen 1 können auch zu einem Batteriemodul zusammengeschaltet sein. Eine oder mehrere galvanische Zellen 1 bilden eine Sekundärbatterie aus.

Die in Figur 1 gezeigte galvanische Zelle 1 wird mittels eines erfindungsgemäßen Ladeverfahrens geladen. Beim Laden heizt sich die galvanische Zelle 1 auf. Entstehende Dissipationswärme wird mittels eines Kühlsystems abgeführt. In Figur 1 ist die galvanische Zelle 1 hierzu auf einer Kühlplatte 3 montiert, welche wenigstens einen Kanal 4 zum Führen eines Kühlmediums mit einem Volumenstrom V aufweist. Der potenziell kälteste Punkt COLDSPOT befindet sich in Figur 1 im unteren, der Kühlplatte 3 zugewandten Bereich der galvanischen Zelle 1 am äußeren Umfang. Der potenziell heißeste Punkt HOTSPOT befindet sich am gegenüberliegenden freien Ende der galvanischen Zelle 1 im Inneren. Die in der Figur 1 dargestellten Bereiche Coldspot und Hotspot haben zumeist, insbesondere in Zelllängsrichtung, nur eine sehr geringe Ausdehnung und der Hotspot befindet sich nur an der ganz oberen inneren Kante und der Coldspot an der äußeren unteren Kante der Zelle.

Unter Durchführung eines erfindungsgemäßen Ladeverfahrens wird nun die galvanische Zelle 1 geladen. Dabei wird gezielt die mittels des Kühlsystems abzuführende Wärmeleistung in Abhängigkeit der Ladephase geregelt.

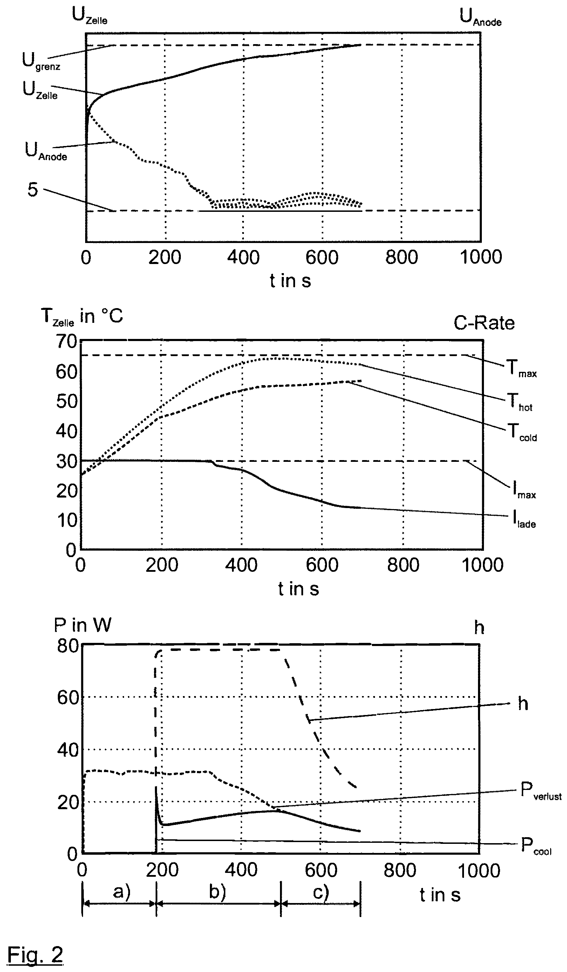

Figur 2 zeigt in drei Diagrammen den Ablauf des erfindungsgemäßen Ladeverfahrens, welches sich in die drei Ladephasen a), b) und c) unterteilt. Die Abszisse der drei Diagramme zeigt jeweils die Zeit t. In den Diagrammen sind einige Größen qualitativ und einige Größen quantitativ dargestellt.

Im in Figur 2 oberen Diagramm ist die Zellspannung U_{Zelle} sowie die Anodenspannung U_{Anode} dargestellt. Ferner sind als horizontale Linien die Vollzellspannungsgrenze U_{grenz} sowie die Plating-Grenze 5 eingezeichnet. Das mittlere Diagramm zeigt die Zelltemperatur T_{Zelle} an verschiedenen Stellen sowie die C-Rate der Zelle 1. Als horizontale Linien sind zudem die Überhitzungsgrenze Tₘₐₓ sowie die Stromgrenze Iₘₐₓ eingezeichnet. Das unterste Diagramm zeigt die von der Zelle 1 dissipierte Wärmeleistung Pᵥₑᵣₗᵤₛₜ, die Kühlleistung P_{cool} des Kühlsystems sowie den Wärmeübergangskoeffizienten h an der Wärmeaustauschfläche zwischen Zelle 1 und Kühlsystem.

In der Ladephase a) erfolgt das Laden der Zelle 1 mit deaktiviertem Kühlsystem. In Ladephase b) wird das Kühlsystem mit maximaler Kühlleistung P_{cool} eingeschaltet und auf Volllast betrieben. In Ladephase c) erfolgt eine Regelung der Kühlleistung P_{cool} derart, dass die Kühlleistung P_{cool} reduziert wird, sodass die Zelltemperaturen T_{Zelle} des potenziell heißesten Punkts HOTSPOT bzw. potenziell kältesten Punkts COLDSPOT der galvanischen Zelle 1 im Wesentlichen konstant bleiben. In dem gezeigten Ausführungsbeispiel bleibt die Hotspottemperatur Tₕₒₜ im Wesentlichen konstant und die Coldspottemperatur T_{cold} nimmt fortwährend zu. Die Regelung des Ladestroms I_{lade} erfolgt anhand bisher bekannter üblicher Ladeverfahren und verläuft zuerst am Maximalwert der Stromgrenze Iₘₐₓ und wird dann mit fortschreitender Ladedauer reduziert. Zum Regeln der Kühlleistung P_{cool} kann entweder eine Regelung basierend auf der gemessenen Hotspottemperatur Tₕₒₜ erfolgen oder aber eine leistungsbasierte Regelung, bei der die Kühlleistung P_{cool} der dissipierten Wärmeleistung Pᵥₑᵣₗᵤₛₜ der galvanischen Zelle 1 entspricht. Somit halten sich dissipierte und abgeführte Wärme die Waage, sodass der Temperaturzustand der galvanischen Zelle 1 im Wesentlichen konstant bleibt.

Das oberste Diagramm zeigt, dass mit fortschreitender Ladedauer die Zellspannung U_{Zelle} fortwährend zunimmt. Die Zelle 1 wird geladen. Dabei sinkt die Anodenspannung U_{Anode} fortwährend ab bis kurz vor Erreichen der Plating-Grenze 5. Es sind dabei mehrere Kurven der Anodenspannung U_{Anode} aus unterschiedlichen Simulationen eingezeichnet. Um die kürzeste Ladedauer zu gewährleisten, sollte die Anodenspannung U_{Anode} an der Plating-Grenze 5 entlanggeführt werden, was hier der Fall ist. Die Plating-Grenze 5 liegt theoretisch bei 0 mV, wobei aus Sicherheitsgründen auch auf leicht über 0 mV geregelt wird. Die Zelle 1 kann also durchgehend an der Anodenpotenziallimitierung, sprich der Plating-Grenze 5, mit höchstmöglicher Coldspottemperatur T_{cold} und minimalen Überspannungen betrieben werden.

Wie dem mittleren Diagramm entnommen werden kann, wird die Hotspottemperatur Tₕₒₜ so nah wie möglich an der Überhitzungsgrenze Tₘₐₓ entlang geregelt, sodass zuverlässig eine Überhitzung des Aktivmaterials der Zelle 1 verhindert wird. Durch das Absenken der Kühlleistung P_{cool} in Ladephase c) wird ein Abkühlen des potenziell kältesten Punkts COLDSPOT bei hohen Ladezuständen vermieden. Im Gegenteil steigt sogar die Coldspottemperatur T_{cold}, wodurch der lokal begrenzte Widerstand sinkt und somit ein höherer Ladestrom I_{lade} zum Durchführen des Ladevorgangs verwendet werden kann. Zudem sinkt in Ladephase c) die Hotspottemperatur Tₕₒₜ etwas ab, wodurch ein Puffer zur Überhitzungsgrenze Tₘₐₓ entsteht. Zudem verbleibt ein leichter Temperaturgradient innerhalb der Zelle 1, der nicht vollständig abgebaut wird, sodass die Zelle 1 nach dem Ladevorgang schnell wieder auf reguläre Betriebstemperaturen gekühlt werden kann. Das untere Diagramm zeigt den Verlauf der während des Ladevorgangs von der Zelle 1 dissipierten Wärme Pᵥₑᵣₗᵤₛₜ, bzw. Wärmeleistung. Beim Wechsel von Ladephase a) zu Ladephase b) wird das Kühlsystem auf Volllast eingeschaltet. Es stellt sich entsprechend der maximal mögliche Wärmeübergangskoeffizient h ein und wird während Ladephase b) aufrechterhalten. Die vom Kühlsystem abgeführte Wärme, also die Kühlleistung P_{cool} steigt anfänglich sehr schnell auf ihren Maximalwert, sinkt dann wieder ab und steigt dann langsam bis zum Ende von Ladephase b) an. In Ladephase c) wird die Kühlleistung P_{cool} der Dissipationswärmeleistung Pᵥₑᵣₗᵤₛₜ nachgeführt. Es erfolgt also eine solche Regelung des Kühlsystems, dass die Hotspottemperatur Tₕₒₜ im Wesentlichen konstant bleibt. Hierzu wird durch Reduzieren der Drehzahl der Kühlmediumförderpumpe der Volumenstrom des flüssigen Kühlmediums reduziert, wodurch der Wärmeübergangskoeffizient h fällt. Der Wärmeübergangskoeffizient h wird also so geregelt, dass der Wärmestrom, der durch das Kühlmedium über die Systemgrenze abgeführt wird, entsprechend der Kühlleistung P_{cool} genau der Wärmeerzeugung der Zelle 1 entspricht. Potenzielle Wärmequellen im Zellgehäuse sowie gegebenenfalls Zellverbinder können dabei ebenfalls berücksichtigt werden.

Durch das Aufteilen des Ladevorgangs auf die Ladephasen a), b) und c) ist für die gesamte Ladedauer eine Verkürzung der Ladezeit durch das Bereitstellen des jeweils maximalen Ladestroms I_{lade} möglich.

Während Ladephase c) eine Verkürzung der Ladedauer gegen Ende des Ladevorgangs, also im Bereich höherer Batterieladezustände, erlaubt, so ist durch die Ladephasen a) und b) eine Beschleunigung der Ladedauer zu Beginn sowie mittig während des Ladevorgangs möglich. Erfindungsgemäß lässt sich also schon alleinig durch die Ladephase c) eine Verkürzung der Ladedauer erreichen. Die Phase c) ist besonders nützlich bei hohen Temperaturen, um ein unnötiges Abzukühlen zu vermeiden. Das ist primär bei höheren Ladezuständen mit einer entsprechenden Aufwärmung der Fall, kann allerdings in gewissen Fällen auch schon bei niedrigen Ladezuständen vorkommen, falls bei hoher Ausgangstemperatur die Temperaturgrenze früh erreicht wird, obwohl der Ladezustand noch gering ist.

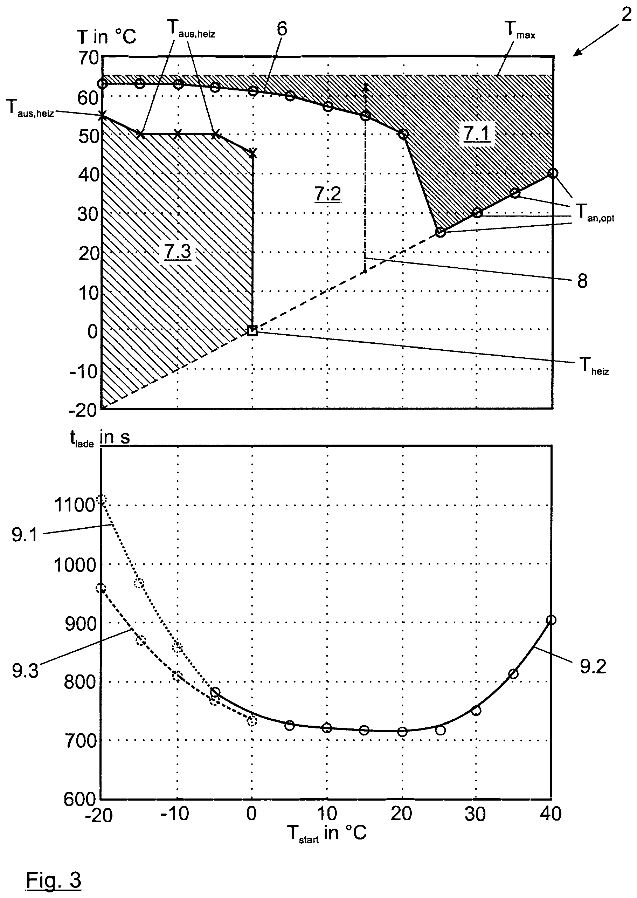

Es stellt sich jedoch ferner die Frage, wann, also bei welcher sich bedingt durch das Laden einstellende Zelltemperatur T_{Zelle}= Tₕₒₜ, am besten von Ladephase a) zu Ladephase b) gewechselt werden sollte. Generell kommt hierzu eine beliebige Aktivierungstemperatur T_{an,opt} (siehe Figur 3) in Frage. In Figur 3 sind zur Wahrung der Übersichtlichkeit dabei nur einige Punkte mit dem entsprechenden Bezugszeichen versehen. Es gibt jedoch einen optimalen Temperaturpunkt für die Zelltemperatur T_{Zelle}, ab der das Kühlsystem auf Volllast aktiviert werden sollte. So wird bei einer zu frühen Aktivierung der potenziell kälteste Punkt COLDSPOT noch nicht ausreichend erwärmt, sodass im Vergleich ein größerer elektrischer Widerstand vorliegt und somit zum Verhindern von Überspannungen nur ein geringerer Ladestrom I_{lade} verwendet werden kann. Wird hingegen das Kühlsystem zu spät aktiviert, also gewartet bis die Zelltemperatur T_{Zelle} noch größer ist, so läuft der potenziell heißeste Punkt HOTSPOT Gefahr zu überhitzen, sodass zum ausreichenden Abkühlen der Ladestrom I_{lade} plötzlich und rapide reduziert werden muss, wodurch ebenfalls die Ladedauer wieder ansteigt.

Anhand von Figur 3 wird der Zusammenhang zwischen der optimalen Aktivierungstemperatur T_{an,opt} und der jeweiligen Ausgangstemperatur Tₛₜₐᵣₜ erläutert. Die Ausgangstemperatur Tₛₜₐᵣₜ korreliert dabei mit der Umgebungstemperatur. Es wird also angenommen, dass die Zelltemperatur T_{Zelle} der Umgebungstemperatur entspricht. Anhand von Messreihen und/oder Simulationen wird dann die in Figur 3 dargestellte Kühl-Heiz-Karte 2 erzeugt. Diese zeigt auf der Abszisse die Ausgangstemperatur Tₛₜₐᵣₜ und auf der Ordinate verschiedene Temperaturen T. Dabei werden für verschiedene Ausgangstemperaturen Tₛₜₐᵣₜ jeweils mehrere Ladevorgänge durchgeführt, wobei für eine respektive Ausgangstemperatur Tₛₜₐᵣₜ so lange geladen wird, bis sich verschiedene Zelltemperaturen T_{Zelle} einstellen, zu denen dann das Kühlsystem aktiviert wird. In der Kühl-Heiz-Karte 2 ist eine Kurve 6 eingezeichnet, welche für die jeweilige Ausgangstemperatur Tₛₜₐᵣₜ die optimale Aktivierungstemperatur T_{an,opt} markiert.

Dabei ist folgendes zu beachten: Die in Figur 3 dargestellten Diagramme beziehen sich lediglich auf die Ermittlung der optimalen Aktivierungstemperatur T_{an,opt} in Abhängigkeit der Ausgangstemperatur Tₛₜₐᵣₜ. Somit wird zur Ermittlung der in Figur 3 dargestellten Informationen in der Ladephase c) keine Regelung der Kühlleistung erfolgen, sondern diese weiterhin auf Maximum betrieben. Diese korrespondierende, sich in Figur 3 im unteren Diagramm einstellende Ladedauer t_{lade} wird also alleinig durch die Wahl der Aktivierungstemperatur T_{an,opt} beeinflusst. Dies erlaubt es einen möglichen Einfluss der Regelung der Kühlleistung P_{cool} in Ladephase c) auf die Ermittlung der optimalen Aktivierungstemperatur T_{an,opt} außen vor zu lassen.

Die Kühl-Heiz-Karte 2 ist in drei Bereiche 7.1, 7.2 und 7.3 unterteilt. Im Bereich 7.1 wird das Kühlsystem betrieben. Im Bereich 7.2 wird weder das Kühlsystem noch eine Heizsystem betrieben. Im Bereich 7.3 wird eine Heizung zum Vorwärmen der Zelle 1 genutzt, welche dann ab einer Heiz-Deaktivierungstemperatur T_{aus,heiz} ausgeschaltet wird. Über einer Ausgangstemperatur Tₛₜₐᵣₜ in der Höhe von ca. 25°C wird direkt zu Beginn des Ladevorgangs das Kühlsystem auf Volllast eingeschaltet. Die Dauer von Ladephase a) beträgt hier also 0 Sekunden.

Das Diagramm ist wie folgt zu lesen: Dargestellt ist die Ausgangstemperatur Tₛₜₐᵣₜ der galvanischen Zelle 1. Durch das Starten des Ladevorgangs erwärmt sich die galvanische Zelle 1, sodass in der Kühl-Heiz-Karte 2 nach oben zu heißeren Temperaturen gewandert wird. Dies wird durch einen Pfeil 8 für eine Ausgangstemperatur Tₛₜₐᵣₜ von 15°C beispielhaft veranschaulicht.

Für hingegen beispielsweise -10° bedeutet dies, dass zusätzlich der Bereich 7.3 durchwandert wird. Dies bedeutet, dass mit Starten des Ladevorgangs auch die Heizung aktiviert wird. Es wird so lange geladen und die Heizung betrieben, bis die Heiz-Deaktivierungstemperatur T_{aus,heiz} erreicht ist. Die Grenze zwischen dem Bereich 7.2 und 7.3 ist dabei durch eine Heiztemperatur T_{heiz} gekennzeichnet. Beim Erreichen der Heiz-Deaktivierungstemperatur T_{aus,heiz} wird die Heizung deaktiviert und es wird der Bereich 7.2 betreten. Es wird weiter geladen, bis die Aktivierungstemperatur T_{an,opt} erreicht ist. Ebenfalls gezeigt ist die Überhitzungsgrenze Tₘₐₓ, wobei dank der Kühlung verhindert wird, dass die Zelltemperatur T_{Zelle} diese Grenze überschreitet.

Wie Figur 3 im unteren Diagramm entnommen werden kann, lässt sich so vor allem bei kalten Ausgangstemperaturen Tₛₜₐᵣₜ bereits eine Verkürzung der Ladedauer erzielen. Eine Kurve 9.1 zeigt dabei die Ladedauer bei standardmäßiger Regelung des Kühlsystems, wenn nicht gekühlt werden muss. Eine Kurve 9.2 zeigt die sich einstellende Ladedauer wenn das Kühlsystem, wie beschrieben, zur jeweiligen Aktivierungstemperatur T_{start,opt} eingeschaltet wird (ohne Heizung). Eine Kurve 9.3 zeigt dich sich einstellende Ladedauer mit vorheriger Beheizung der Zelle 1.

Zur weiteren Verbesserung der Ladedauer erfolgt somit auf den in Figur 3 dargestellten Erkenntnissen aufbauend die Regelung des Kühlsystems in Ladephase c) (in Figur 3 nicht gezeigt).

## Patentansprüche

1. Ladeverfahren für eine Sekundärbatterie, wobei der zum Aufladen zumindest einer galvanischen Zelle (1) der Sekundärbatterie mit elektrischer Energie verwendete Ladestrom (I_{lade}) während des Ladevorgangs unter Berücksichtigung von zumindest einer der Größen: maximale Zellspannung, minimale Anodenspannung, Zelltemperatur (T_{Zelle}) und/oder maximaler Ladestrom geregelt wird und die dabei dissipierte Wärme mittels eines während des Ladevorgangs zumindest zeitweise aktiven Kühlsystems abgeführt wird,
**gekennzeichnet durch** die folgenden Ladephasen:
a) Laden der Zelle (1) mit deaktiviertem Kühlsystem, solange die Zelltemperatur (T_{Zelle}) am potentiell heißesten Punkt (HOTSPOT) der Zelle (1) kleiner ist als eine festgelegte Aktivierungstemperatur (T_{an,opt}), wobei die Aktivierungstemperatur (T_{an,opt}) vom Zelltyp und der Ausgangstemperatur (Tₛₜₐᵣₜ) der Zelle (1) beim Starten des Ladevorgangs abhängig ist;
b) Laden der Zelle (1) mit auf Volllast eingeschaltetem Kühlsystem, sobald die Zelltemperatur (T_{Zelle}) am potentiell heißesten Punkt (HOTSPOT) der Zelle (1) die festgelegte Aktivierungstemperatur (T_{an,opt}) erreicht; und
c) Sobald die Temperaturänderung der Zelltemperatur (T_{Zelle}) am potentiell heißesten Punkt (HOTSPOT) der Zelle (1) Null erreicht: Reduzieren der Kühlleistung (P_{cool}) des Kühlsystems und Regelung der Kühlleistung (P_{cool}) derart, dass die Zelltemperatur (T_{Zelle}) am potentiell heißesten Punkt (HOTSPOT) der Zelle (1) und/oder am potentiell kältesten Punkt (COLDSPOT) der Zelle (1) im Wesentlichen konstant gehalten wird; und wobei
die Zelltemperatur (T_{Zelle}) in einem festgelegten Ladezustandsbereich vor Erreichen der Vollladung der Zelle (1) abgesenkt wird.

2. Verfahren nach Anspruch 1,
**dadurch gekennzeichnet, dass**
zur Regelung der Kühlleistung (P_{cool}):
- die von der Zelle (1) abgegebene Wärmeleistung (Pᵥₑᵣₗᵤₛₜ) gemessen und/oder rechnerisch abgeschätzt wird;
- die vom Kühlsystem abführbare oder abgeführte Wärmeleistung gemessen und/oder rechnerisch abgeschätzt wird; und
- die Kühlleistung (P_{cool}) derart geregelt wird, dass die abführbare oder abgeführte Wärmeleistung im Wesentlichen der von der Zelle (1) abgegebenen Wärmeleistung (Pᵥₑᵣₗᵤₛₜ) entspricht.

3. Verfahren nach Anspruch 1 oder 2,
**dadurch gekennzeichnet, dass**
zum Einstellen der vom Kühlsystem abzuführenden Wärmeleistung der Wärmeübergangskoeffizient zwischen der Interaktionsfläche zwischen Zelle (1) und Kühlsystem angepasst wird.

4. Verfahren nach Anspruch 3,
**dadurch gekennzeichnet, dass**
ein fluidbasiertes Kühlsystem genutzt wird, wobei zumindest ein Abschnitt der Zelle (1) mittelbar oder unmittelbar vom Kühlmedium angeströmt oder umströmt wird, und zum Anpassen des Wärmeübergangskoeffizienten der Volumenstrom des Kühlmediums geregelt wird.

5. Verfahren nach Anspruch 4,
**dadurch gekennzeichnet, dass**
zum Anpassen des Volumenstroms des Kühlmediums die Drehzahl einer Kühlmediumförderpumpe geregelt wird.

6. Verfahren nach einem der Ansprüche 1 bis 5,
**dadurch gekennzeichnet, dass**
wenn die Ausgangstemperatur (Tₛₜₐᵣₜ) der Zelle (1) kleiner ist als eine festgelegte Heiztemperatur (T_{heiz}), die Zelle (1) während Ladephase a) zumindest zeitweise aktiv beheizt wird, wobei eine hierzu verwendete Heizung beim Erreichen einer unterhalb der Aktivierungstemperatur (T_{an,opt}) liegenden Heiz-Deaktivierungstemperatur (T_{aus,heiz}) abgeschaltet wird, und wobei die Heiz-Deaktivierungstemperatur (T_{aus,heiz}) vom Zelltyp und der Ausgangstemperatur (Tₛₜₐᵣₜ) der Zelle (1) beim Starten des Ladevorgangs abhängig ist.

7. Verfahren nach einem der Ansprüche 1 bis 6,
**dadurch gekennzeichnet, dass**
eine Recheneinheit zur Regelung des Kühlsystems die Aktivierungstemperatur (T_{an,opt}) aus einer Kühl-Heiz-Karte (2) ausliest, wobei die Kühl-Heiz-Karte (2) für den verwendeten Zelltyp initial durch das Durchführen von Messungen und/oder Simulationen erstellt wurde, wobei zum Bestimmen des Zusammenhangs zwischen Aktivierungstemperatur (T_{an,opt}) und Ausgangstemperatur (Tₛₜₐᵣₜ) für unterschiedliche Ausgangstemperaturen (Tₛₜₐᵣₜ) das Kühlsystem jeweils zu unterschiedlichen Zelltemperaturen (T_{Zelle}) aktiviert wurde und diejenige Zelltemperatur (T_{Zelle}) als Aktivierungstemperatur (T_{an,opt}) festgelegt wird, zu der die Ladezeit (t_{lade}) der Zelle (1) zur respektiven Ausgangstemperatur (Tₛₜₐᵣₜ) am geringsten ist.

8. Verfahren nach Anspruch 6 und 7,
**dadurch gekennzeichnet, dass**
eine Recheneinheit zur Regelung der Heizung die Heiztemperatur (T_{heiz}) und die Heiz-Deaktivierungstemperatur (T_{aus,heiz}) aus der Kühl-Heiz-Karte (2) ausliest, wobei zum Bestimmen des Zusammenhangs zwischen Heiztemperatur (T_{heiz}), Heiz-Deaktivierungstemperatur (T_{aus,heiz}) und Ausgangstemperatur (Tₛₜₐᵣₜ) für unterschiedliche Ausgangstemperaturen (Tₛₜₐᵣₜ) die Heizung jeweils zu unterschiedlichen Zelltemperaturen (T_{Zelle}) aktiviert und deaktiviert wurde und diejenigen Zelltemperaturen (T_{Zelle}) als Heiztemperatur (T_{heiz}) und Heiz-Deaktivierungstemperatur (T_{aus,heiz}) festgelegt werden, zu der die Ladezeit (t_{lade}) der Zelle (1) zur respektiven Ausgangstemperatur (Tₛₜₐᵣₜ) am geringsten ist.

9. Fahrzeug, umfassend eine Traktionsbatterie, ein Kühlsystem, und wenigstens ein Steuergerät,
**dadurch gekennzeichnet, dass**
die Traktionsbatterie, das Kühlsystem und das wenigstens eine Steuergerät zur Durchführung eines Verfahrens nach einem der Ansprüche 1 bis 8 eingerichtet sind.

## Claims

1. Charging method for a secondary battery, the charging current (I_{lade}) used to charge at least one galvanic cell (1) of the secondary battery with electrical energy during the charging process being regulated taking into account at least one of the following parameters: maximum cell voltage, minimum anode voltage, cell temperature (T_{Zelle}) and/or maximum charging current, and the heat dissipated in the process being discharged by means of a cooling system that is at least temporarily active during the charging process,
**characterized by** the following charging phases:
a) charging the cell (1) while the cooling system is deactivated, as long as the cell temperature (T_{Zelle}) at the potentially hottest point (HOTSPOT) of the cell (1) is lower than a defined activation temperature (T_{an,opt}), the activation temperature (T_{an,opt}) being dependent on the cell type and the starting temperature (Tₛₜₐᵣₜ) of the cell (1) when the charging process is started;
b) charging the cell (1) while the cooling system is switched on at full load as soon as the cell temperature (T_{Zelle}) at the potentially hottest point (HOTSPOT) of the cell (1) has reached the defined activation temperature (T_{an,opt}); and
c) as soon as the temperature change of the cell temperature (T_{Zelle}) at the potentially hottest point (HOTSPOT) of the cell (1) reaches zero: reducing the cooling capacity (P_{cool}) of the cooling system and regulating the cooling capacity (P_{cool}) such that the cell temperature (T_{Zelle}) at the potentially hottest point (HOTSPOT) of the cell (1) and/or at the potentially coldest point (COLDSPOT) of the cell (1) is kept substantially constant;
and the cell temperature (T_{Zelle}) being reduced within a defined state of charge range before the cell (1) is fully charged.

2. Method according to claim 1,
**characterized in that**
in order to regulate the cooling capacity (P_{cool}):
- the heat output (Pᵥₑᵣₗᵤₛₜ) delivered from the cell (1) is measured and/or estimated by calculation;
- the heat output that can be discharged or is discharged by the cooling system is measured and/or estimated by calculation; and
- the cooling capacity (P_{cool}) is regulated such that the heat output that can be discharged or is discharged corresponds substantially to the heat output (Pᵥₑᵣₗᵤₛₜ) delivered by the cell (1).

3. Method according to claim 1 or claim 2,
**characterized in that**
the heat transfer coefficient between the interaction surface between the cell (1) and the cooling system is adapted in order to adjust the heat output to be discharged by the cooling system.

4. Method according to claim 3,
**characterized in that**
a fluid-based cooling system is used, at least one portion of the cell (1) being directly or indirectly exposed to or surrounded by the cooling medium, and the volume flow rate of the cooling medium being regulated in order to adapt the heat transfer coefficient.

5. Method according to claim 4,
**characterized in that**
the speed of a cooling medium pump is regulated in order to adapt the volume flow rate of the cooling medium.

6. Method according to any of claims 1 to 5,
**characterized in that**
if the starting temperature (Tₛₜₐᵣₜ) of the cell (1) is smaller than a defined heating temperature (T_{heiz}), the cell (1) is actively heated at least temporarily during charging phase a), with heating used for this purpose being switched off when a heating deactivation temperature (T_{aus,heiz}) below the activation temperature (T_{an,opt}) is reached, and the heating deactivation temperature (T_{aus,heiz}) depending on the cell type and the starting temperature (Tₛₜₐᵣₜ) of the cell (1) at the start of the charging process.

7. Method according to any of claims 1 to 6,
**characterized in that**
a computing unit for regulating the cooling system reads the activation temperature (T_{an,opt}) from a cooling-heating map (2), the cooling-heating map (2) for the cell type used having been initially created by performing measurements and/or simulations, wherein, in order to determine the relationship between activation temperature (T_{an,opt}) and starting temperature (Tₛₜₐᵣₜ) for different starting temperatures (Tₛₜₐᵣₜ), the cooling system was activated at different cell temperatures (T_{Zelle}), and the cell temperature (T_{Zelle}) at which the charging time (t_{lade}) of the cell (1) at the relevant starting temperature (Tₛₜₐᵣₜ) is shortest is defined as the activation temperature (T_{an,opt}).

8. Method according to claim 6 and claim 7,
**characterized in that**
a computing unit for regulating the heating reads the heating temperature (T_{heiz}) and the heating deactivation temperature (T_{aus,heiz}) from the cooling-heating map (2), wherein, in order to determine the relationship between heating temperature (T_{heiz}), heating deactivation temperature (T_{aus,heiz}) and starting temperature (Tₛₜₐᵣₜ) for different starting temperatures (Tₛₜₐᵣₜ), the heating was activated and deactivated at different cell temperatures (T_{Zelle}), and the cell temperatures (T_{Zelle}) at which the charging time (t_{lade}) of the cell (1) at the relevant starting temperature (Tₛₜₐᵣₜ) is shortest are defined as the heating temperature (T_{heiz}) and heating deactivation temperature (T_{aus,heiz}).

9. Vehicle comprising a traction battery, a cooling system, and at least one control device,
**characterized in that**
the traction battery, the cooling system and the at least one control device are configured to perform a method according to any of claims 1 to 8.

## Revendications

1. Procédé de charge pour une batterie secondaire, dans lequel le courant de charge (I_{lade}) utilisé pour la charge d'au moins une cellule galvanique (1) de la batterie secondaire avec de l'énergie électrique est réglé pendant le processus de charge tout en tenant compte d'au moins l'une des grandeurs parmi : tension maximale de cellule, tension anodique minimale, température de cellule (T_{Zelle}) et/ou courant maximal de charge et la chaleur ainsi dissipée est évacuée au moyen d'un système de refroidissement au moins temporairement actif pendant le processus de charge,
**caractérisé par** les phases de charge suivantes :
a) charge de la cellule (1) avec le système de refroidissement désactivé, tant que la température de cellule (T_{Zelle}) au point potentiellement le plus chaud (HOTSPOT) de la cellule (1) est inférieure à une température d'activation (T_{an,opt}) fixée, dans lequel la température d'activation (T_{an,opt}) dépend du type de cellule et de la température initiale (Tₛₜₐᵣₜ) de la cellule (1) lors du démarrage du processus de charge ;
b) charge de la cellule (1) avec le système de refroidissement activé à pleine charge, dès que la température de cellule (T_{Zelle}) au point potentiellement le plus chaud (HOTSPOT) de la cellule (1) atteint la température d'activation (T_{an,opt}) fixée ; et
c) dès que la variation de la température de cellule (T_{Zelle}) au point potentiellement le plus chaud (HOTSPOT) de la cellule (1) atteint zéro : réduction de la puissance de refroidissement (P_{cool}) du système de refroidissement et régulation de la puissance de refroidissement (P_{cool}) de telle sorte que la température de cellule (T_{Zelle}) est maintenue sensiblement constante au point potentiellement le plus chaud (HOTSPOT) de la cellule (1) et/ou au point potentiellement le plus froid (COLDSPOT) de la cellule (1) ; et dans lequel
la température de cellule (T_{Zelle}) est abaissée dans une plage d'état de charge fixée avant que la pleine charge de la cellule (1) ne soit atteinte.

2. Procédé selon la revendication 1,
**caractérisé en ce que**
pour la régulation de la puissance de refroidissement (P_{cool}) :
- la puissance thermique (Pᵥₑᵣₗᵤₛₜ) dégagée par la cellule (1) est mesurée et/ou estimée par calcul ;
- la puissance thermique pouvant être évacuée ou évacuée par le système de refroidissement est mesurée et/ou estimée par calcul ; et
- la puissance de refroidissement (P_{cool}) est régulée de telle sorte que la puissance thermique pouvant être évacuée ou évacuée correspond sensiblement à la puissance thermique (Pᵥₑᵣₗᵤₛₜ) dégagée par la cellule (1).

3. Procédé selon la revendication 1 ou 2,
**caractérisé en ce que**
pour le réglage de la puissance thermique à évacuer par le système de refroidissement, le coefficient de transfert de chaleur entre la surface d'interaction entre la cellule (1) et le système de refroidissement est adapté.

4. Procédé selon la revendication 3,
**caractérisé en ce que**
un système de refroidissement à base de fluide est utilisé, dans lequel au moins une section de la cellule (1) reçoit directement ou indirectement un flux de fluide de refroidissement ou est entourée par celui-ci, et le débit volumique du fluide de refroidissement est régulé afin d'adapter le coefficient de transfert de chaleur.

5. Procédé selon la revendication 4,
**caractérisé en ce que**
la vitesse de rotation d'une pompe d'alimentation en fluide de refroidissement est régulée afin d'adapter le débit volumique du fluide de refroidissement.

6. Procédé selon l'une des revendications 1 à 5,
**caractérisé en ce que**
lorsque la température initiale (Tₛₜₐᵣₜ) de la cellule (1) est inférieure à une température de chauffage (T_{heiz}) fixée, la cellule (1) est chauffée activement au moins temporairement pendant la phase de charge a), dans lequel un chauffage utilisé à cet effet est coupé lorsqu'une température de désactivation du chauffage (T_{aus,heiz}) inférieure à la température d'activation (T_{an,opt}) est atteinte, et dans lequel la température de désactivation du chauffage (T_{aus,heiz}) dépend du type de cellule et de la température initiale (Tₛₜₐᵣₜ) de la cellule (1) lors du démarrage du processus de charge.

7. Procédé selon l'une des revendications 1 à 6,
**caractérisé en ce que**
une unité de calcul pour la régulation du système de refroidissement lit la température d'activation (T_{an,opt}) à partir d'une carte de chauffage et de refroidissement (2), dans lequel la carte de chauffage et de refroidissement (2) a été établie initialement pour le type de cellule utilisé à l'aide de la réalisation de mesures et/ou de simulations, dans lequel, pour la détermination de la relation entre la température d'activation (T_{an,opt}) et la température initiale (Tₛₜₐᵣₜ) pour différentes températures initiales (Tₛₜₐᵣₜ), le système de refroidissement a été activé respectivement à différentes températures de cellule (T_{Zelle}) et la température de cellule (T_{Zelle}) qui est fixée comme température d'activation (T_{an,opt}) est celle à laquelle le temps de charge (t_{lade}) de la cellule (1) à la température initiale (Tₛₜₐᵣₜ) respective est le plus faible.

8. Procédé selon les revendications 6 et 7,
**caractérisé en ce que**
une unité de calcul pour la régulation du chauffage lit la température de chauffage (T_{heiz}) et la température de désactivation du chauffage (T_{aus,heiz}) à partir de la carte de chauffage et de refroidissement (2), dans lequel, pour la détermination de la relation entre la température de chauffage (T_{heiz}), la température de désactivation du chauffage (T_{aus,heiz}) et la température initiale (Tₛₜₐᵣₜ) pour différentes températures initiales (Tₛₜₐᵣₜ), le chauffage a été activé et désactivé respectivement à différentes températures de cellule (T_{Zelle}) et les températures de cellule (T_{Zelle}) qui sont fixées comme température de chauffage (T_{heiz}) et température de désactivation du chauffage (T_{aus,heiz}) sont celles auxquelles le temps de charge (t_{lade}) de la cellule (1) à la température initiale (Tₛₜₐᵣₜ) respective est le plus faible.

9. Véhicule, comprenant une batterie de traction, un système de refroidissement, et au moins un appareil de commande,
**caractérisé en ce que**
la batterie de traction, le système de refroidissement et l'au moins un appareil de commande sont configurés pour réaliser un procédé selon l'une des revendications 1 à 8.
